# EUROPEAN PATENT SPECIFICATION

(11) **EP 2 206 294 B1**
(45) Date of publication and mention of the grant of the patent: **16.05.2018**
(21) Application number: 08804222.1
(22) Date of filing: 15.09.2008
(51) Int. Cl.: H04L 12/54, H04L 12/863, H04L 12/861, H04L 12/879, H04L 1/18, G06F 5/12

(54) **A MEMORY BUFFER SYSTEM AND A METHOD FOR OPERATING A MEMORY BUFFER SYSTEM FOR FAST DATA EXCHANGE**
SPEICHERPUFFERSYSTEM UND VERFAHREN ZUM BETRIEB EINES SPEICHERPUFFERSYSTEMS FÜR SCHNELLEN DATENAUSTAUSCH
SYSTÈME DE MÉMOIRE TAMPON ET PROCÉDÉ DE FONCTIONNEMENT DE SYSTÈME DE MÉMOIRE TAMPON POUR L'ÉCHANGE RAPIDE DE DONNÉES

(30) Priority: 02.10.2007 EP 07117776
(43) Date of publication of application: 14.07.2010
(73) Proprietor: Tixel GmbH, 30625 Hannover (DE)
(72) Inventor: SIEMENS, Eduard, 31319 Sehnde (DE); QIU, Xiaopeng, 09127 Chemnitz (DE)
(74) Representative: Schäferjohann, Volker
(86) International application number: PCT/EP2008/062263
(87) International publication number: WO 2009/043712

(56) References cited:
- US-A1- 2003 141 897
- US-A1- 2004 131 074
- US-B1- 6 775 245

## Description

The invention relates to a memory buffer system and a method for operating a memory buffer system for fast data exchange in a multi-thread environment.

### Background of the invention

In high-performance network attached computer systems the implementation of data transport protocols is usually organized in a multi-threaded fashion. Hereby, the tasks of handling sending user data as well as signaling data, handling receiving data and control information and the communication with a user application are delivered to different program threads or processes within the system.

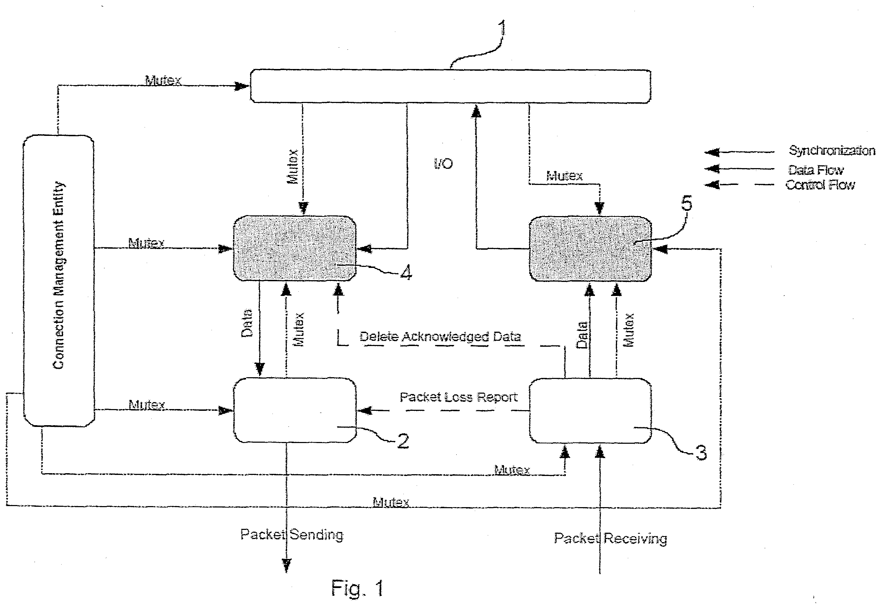

Fig. 1 shows a block diagram of a common data transport protocol implementation. Hereby, when an application starts data communication over a network system, it needs at least one thread for sending (send handler 2), one thread for receiving (receive handler 3) and an application thread 1 (API-thread) that transports data between the user application and a protocol stack. The send handler 2 is used to send data packets and control information to the network system. As soon as packet loss is detected, the send handler 2 retransmits lost packets. A send buffer 4 temporarily stores unacknowledged data, till an acknowledgment is delivered to the sender thread.

Receive handler 3 receives data from the network system and stores them into a receive buffer 5. In case of a packet loss detection, the receive handler 3 informs the send handler 2, so it can send a control packet with loss data information to the sender thread of the communication pair. Since different tasks according to Fig. 1 access shared data structures, those accesses must be synchronized. Conventionally, such synchronization is implemented by mutexes or semaphores.

While the send handler 2 and the receive handler 3 are function components, the send buffer 4 and the receive buffer 5 may be referred to as data components.

When the API-thread 1 has to write data into the send buffer 4, it applies a mutex or a semaphore to block the simultaneously reading access from the send handler 2. If the send handler 2 tries to read data from the send buffer 4 for sending, it also applies a mutex or semaphore to prevent a simultaneous access attempt from the API-thread. The access from receive handler 3 to receive buffer 5 is similar to that of the send handler 2.

The intensive use of mutexes and semaphores for thread synchronization decreases stack performance rapidly, since simultaneous access to the data, leads to waits for process threads. Moreover, it leads to a rapid increase of the number of necessary system calls for thread synchronization.

From US 2004/0131074 A1 a method and device for managing a data buffer is known that stores packets for transmission. The data buffer is managed as a FIFO circular queue. Three sequence numbers index a pointer array addressing the buffer. These sequence numbers correspond to the tail of the queue, the point in the queue from which the next packet is to be transmitted and the head of the queue, corresponding to the last packet acknowledged as correctly received plus one. When a packet is negatively acknowledged, the sequence number corresponding to the next packet to be transmitted is reset to the head of the queue.

From US 2003/0141897 A1 FIFO queues are known which enable multiple accesses to data stored therein. A release pointer points to a queue location containing previously read data until a release signal is asserted that changes the release pointer while a read pointer is used to read data from the queue. The repeat signal allows the read pointer to reread previously read data. Asserting the repeat signal sets the read pointer to the value of the release pointer. Once data is no longer needed, the release signal is asserted, causing the release pointer to be incremented with the read pointer thereby freeing memory locations. FIFO queues may comprise multiple release pointers, multiple release and multiple repeat signals. FIFO queues may also comprise a switch signal, which causes the read pointer to switch values with a release pointer. FIFO queues may comprise multiple read pointers and an input signal for determining which read pointer is used.

From US 6 775 245 a data transfer control device and electronic equipment that are capable of reducing processing overheads, thus enabling high-speed data transfer within a compact hardware configuration are known. In addition to a FIFO, an internal RAM capable of storing packets in a randomly accessible manner is provided between a link core and a CPU in a data transfer control device conforming to the IEEE 1394 standard. The RAM storage area is divided into a header area, a data area, and a CPU work area, and the header and data areas are divided into areas for reception and transmission. Tags are used to write the header of a receive packet to the header area and the data thereof to the data area. Pointers are provided for controlling the size of each area in RAM variably, and the size of each area can be varied dynamically after power is switched on. Each area has a ring buffer structure. The size of area storing the header or data of one packet is fixed.

### The invention

It is the object of the invention to provide a more efficient memory buffer system and a method for operating a memory buffer system for fast data exchange in a multi-thread environment for more efficiently managing data exchange. Especially, the efficiency of data exchange between several threads shall be improved, i.e. when implementing a network transport protocol stack.

This object is achieved by a memory buffer system according to claim 1 and a method for operating a memory buffer system according to claim 6. The dependent claims include advantageous further developments and improvements of the invention.

### Description of preferred embodiments of the invention

Following preferred embodiments of the invention are described in detail by referring to Figures. In the Figures show:
- Fig. 1: a block diagram of a common data transport protocol implementation,
- Fig. 2: a schematic representation of an asynchronous read/write ring buffers (subsequently abbreviated as ARWRB) buffer management system,
- Fig. 3: a schematic representation of methods which can be implemented in the send memory ring buffer,
- Fig. 4: a schematic representation of an interaction of the methods depicted in Fig. 3 with reader and writer threads,
- Fig. 5: a schematic representation of three methods which can be implemented in the send token ring buffer,
- Fig. 6: a schematic representation of an interaction of the methods depicted in Fig. 5,
- Fig. 7: shows a schematic representation of an interaction of send memory ring buffer- and send token ring buffer-methods within receive and send handler,
- Fig. 8: a schematic representation of five methods which can be implemented in the receive memory ring buffer, and
- Fig. 9: a schematic representation of an interaction of the methods depicted in Fig. 8.

The present invention, proposes to use an interconnected system of different kinds of memory buffers, implemented as asynchronous read/write ring buffers. The ring buffers are organized in a way, in which data can be stored into the ring buffer or fetched from the ring buffer essentially avoiding synchronization means like mutexes or semaphores.

Admittedly, one mutex may still be used within a receive ring buffer in case of a transmission of irregular packets, the occurrence of irregular packets can, however, be kept rarely. The term of irregular packets implies a presumption, that mostly, data are transmitted in constant-size chunks, so called regular packets. Only in cases of some exceptions, data packets, smaller than regular packets are transmitted over the network. Such short packets are called irregular packets, i.e. when there are not enough data to assemble a regular packet.

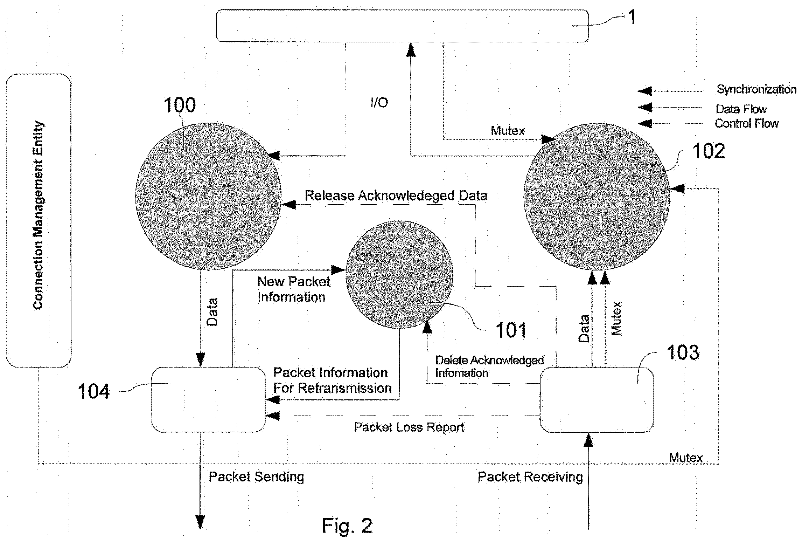

Fig. 2 a schematic representation of a basic ARWRB buffer management system.

In contrast to the conventional buffer management system (see Fig. 1), three memory ring buffers, namely a send memory ring buffer (SRB) 100, a send token ring buffer (STRB) 101 and a receive memory ring buffer (RRB) 102, are used within a data transport protocol stack.

Necessary memory space for the SRB 100, the STRB 101 and the RRB 102 is preferably allocated at the initialization phase of the transmission system. So, during ring buffer operation, no buffer growth or shrinking should be performed. Besides a main application thread 1, in which API calls can be processed, one sending and one receiving threads are also started during the initialization phase. When a receive handler 103 of a data sender receives a data acknowledgement, it releases the corresponding space of buffer within the SRB 100. It also deletes the corresponding token from the STRB 101. The send handler 104, besides, records all transmitted packet information within the STRB 101. So, in case of packet retransmission, the sender thread (send handler 104) can directly refer to the buffer address, associated with retransmitted sequence number.

While the send handler 104 and the receive handler 103 are function components, the SRB 100, the STRB 101 and the RRB 102 may referred to as data components.

A reader thread of the SRB 100 (send handler 104) can access the SRB 100 without requesting system calls, e.g. mutex, to stop a writer thread (API-thread 1) which tries to write simultaneously data into the SRB 100, or vice versa.

The data processing within the RRB 102 is basically similar to the processing within the SRB 100. The receive handler 103 can write received data simultaneously to the RRB 102 while the API-thread tries to read data from it. However, in case of the occurrence of an irregular data packet, some special synchronization means between the API-thread send and the receive handler 103 are necessary.

For the sake of simplicity of the proposed buffer management system, it is assumed, that the API send call blocks, when the SRB 100 has not enough space, to store data from the send call and respectively, the API receive call blocks, when no data are stored within the RRB 102 while the receive call is raised.

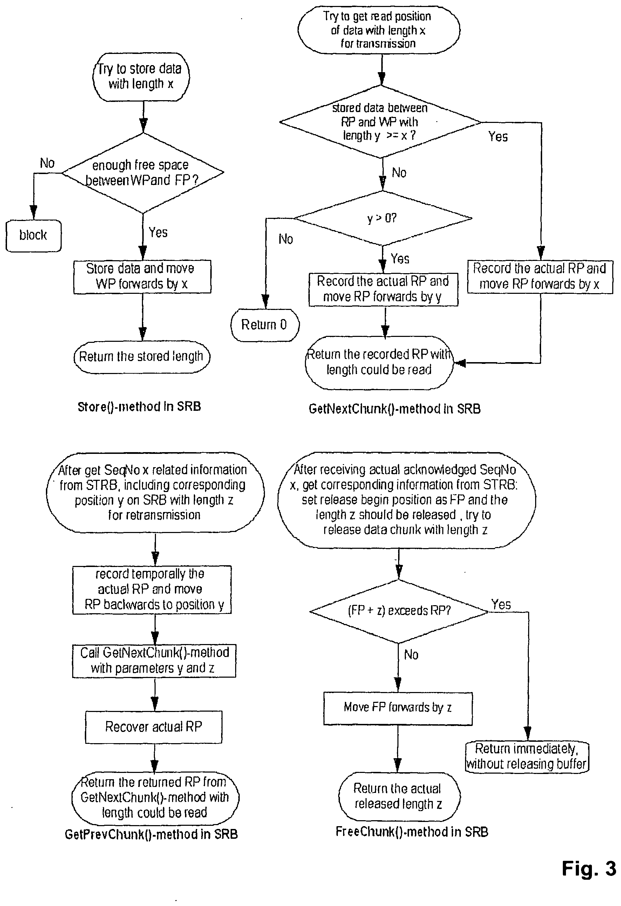

Referring to Fig. 3 to 9, further details are described. A proposed implementation buffer is described in an object-oriented semantics. It can be implemented in hardware, embedded software or as an application layer process. In Fig. 3 to 9, the same features are referred to by the same reference numerals used in Fig. 2.

Fig. 3 shows a schematic representation of methods which can be implemented in the send memory ring buffer (SRB) 100.

The SRB 100 is accessed through three pointers - a read pointer (SRB-RP) 300, write pointer (SRB-WP) 301 and filled pointer (SRB-FP) 302, which indicate access points to the SRB 100. Hereby the:
- The SRB-WP 301 can only be used by writer thread (API-Thread). The SRB-WP 301 points to the actual buffer address with enough free space, in which the data should be temporarily stored. If a data chunk has been successfully stored, the SRB-WP 301 should be moved ahead by the amount of stored data.
- The SRB-RP 300 can only be used by reader thread (send handler). The SRB-RP 300 points to the first byte, that is not yet read by the send handler 104. If a data chunk has been read successfully from the SRB 100, the SRB-RP 300 should be moved ahead by the amount of read data.
- The SRB-FP 302 is moved forwards by another reader thread (receive handler) in case of an acknowledge reception.

If a pointer points to the end of allocated space, a wrap around of the pointer is performed.

In general, a non-synchronized access to the SRB 100 is only possible, when just one writer thread (API-thread) writes into the SRB 100 and at most one reader thread (send handler 104) reads from it. This condition is not fulfilled in the described scenario, since besides the send handler 104 the receive handler 103 also accesses the SRB 100.

However, the SRB-RP 300 can only be moved by the send handler 104 (reader thread) for data (re-)transmission, and the SRB-FP 302 can only be moved by the receive handler (another reader thread) on condition that the transmitted packet is acknowledged by remote side application. That's why there is no collision between the SRB-RP 300 and SRB-FP 302, so thread synchronization is not needed. The SRB 100 on the sender side has four major methods to meet the needs for data temporal storage into ring buffer, for packet sending, for packet loss handling, and for releasing acknowledged data.

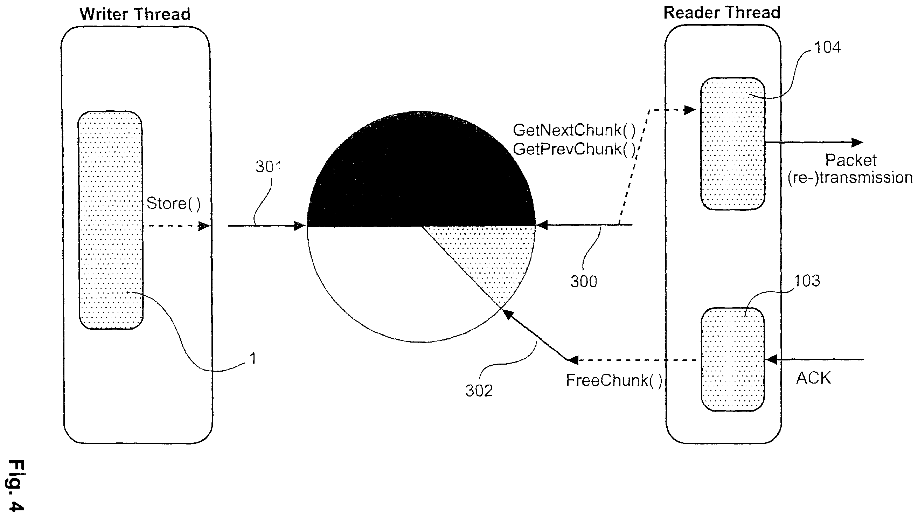

Fig. 4 shows a schematic representation of an interaction of the methods depicted in Fig. 3 with reader and writer threads.

The *Store()-*method in writer thread is used to store data temporarily into the SRB 100 and move the SRB-WP 301 correspondingly. In order to send new data, the *GetNextChunk() -*method is used to get the read position and the number of stored bytes from the reader thread (send handler). The RP is moved ahead as appropriated. If packet loss is detected, *GetPrevChunk() -* method is called to give the reader thread (send handler) the read position of the corresponding data packet and the length of the respective data chunk. If an acknowledgement (ACK) from the remote side is received, another reader thread (receive handler) calls the *FreeChunk()* -method to move the FP in SRB. The STRB has to be used while using *GetNextChunk()-, GetPrevChunk()-* and *FreeChunk()*-methods.

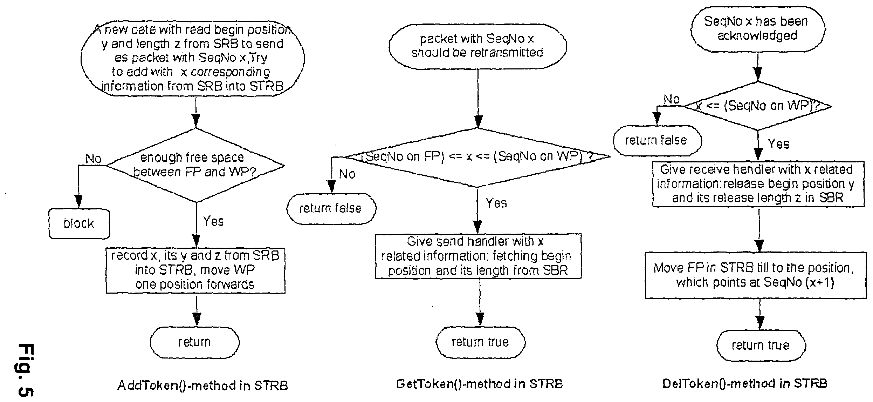

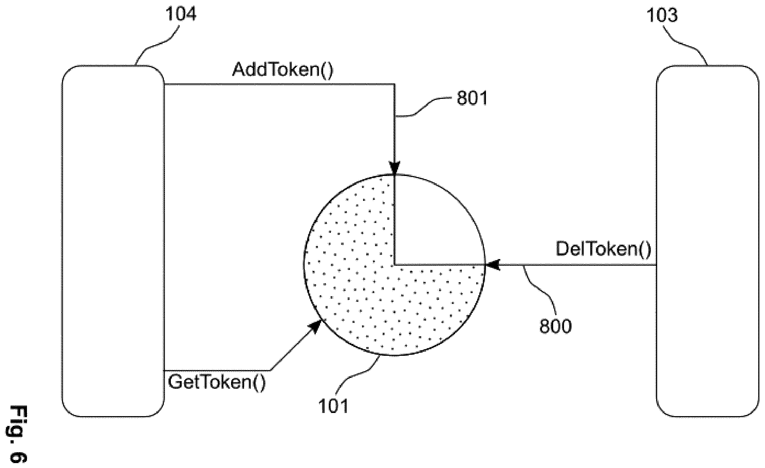

Referring to Fig. 5 and 6, the functionality of the send token ring buffer (STRB) 101 is described in further detail. Fig. 5 shows a schematic representation of three methods which can be implemented in the send token ring buffer (STRB) 101. Fig. 6 shows a schematic representation of an interaction of the methods depicted in Fig. 5.

While the send handler 104 fetches data from the SRB 100 in order to send it over the network, the STRB 101 is used to record the corresponding buffer positions and packet sizes in conjunction with the particular sequence number. As soon as packet loss is detected at the sender side, the send handler 104 can quickly resolve corresponding information of the puffer position of the lost data from the STRB 101 in order to retransmit the data.

Following prerequisites for the STRB 101 must be fulfilled:
- A data structure to record the information of a packet, including: sequence number, position of the first byte of data packet within the SRB, and packet size.
- An array with sufficient length to record sent packets must be allocated. Each element comprises of an array, described above.

The STRB 101 has only a STRB-FP 800 and a STRB-WP 801, not a RP:
- The STRB-FP 800 indicates the actual released position in the STRB 101, all packets with sequence numbers less than the sequence number on the STRB-FP 800 are already acknowledged by remote side application. The STRB-FP 800 should only be moved by reader thread.
- The STRB-WP 801 indicates the actual write position in the STRB 101, the packet with the sequence number on STRB-WP 801 is the recent transmitted packet. The STRB-WP 801 should only be moved by writer thread.

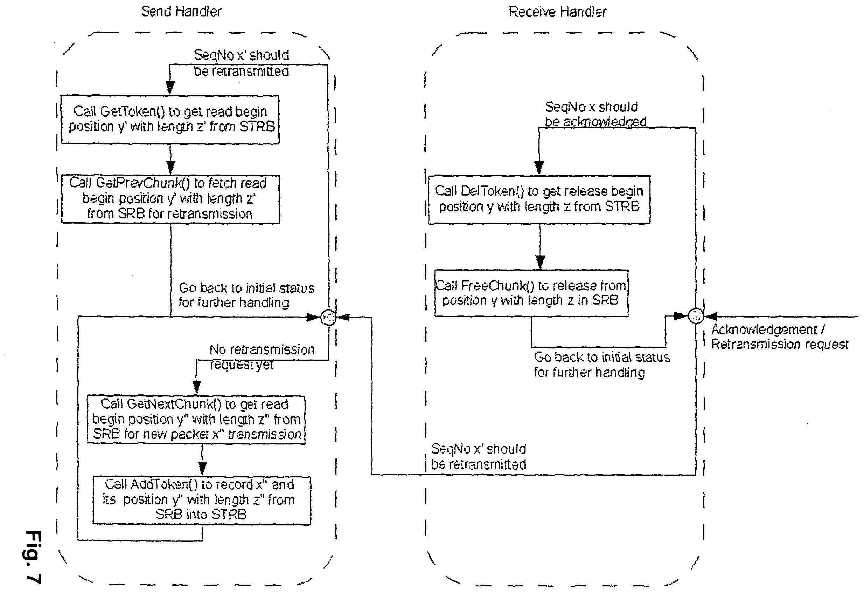

Fig. 7 shows a schematic representation of an interaction of the SRB- and STRB-methods within the receive handler 103 and the send handler 104.

Each time the send handler 104 sends a new data packet, which is fetched from the SRB 100, *AddToken()-*method is called to record corresponding packet information within the STRB 101. Once an ACK is received, the receive handler 103 processes it and calls *DelToken()-*method to move the STRB-FP 800 of the STRB 101 correspondingly; if *DelToken()* successfully implemented, the *FreeChunk()-*method is called to release acknowledged data from the SRB 100.

If a packet retransmission must be performed, the receive handler 103 passes only the sequence number to the send handler 104, so the send handler 104 calls *GetToken()-*method to get corresponding packet information from the STRB 101 in order to call the *GetPrevChunk()-*method to retransmit it.

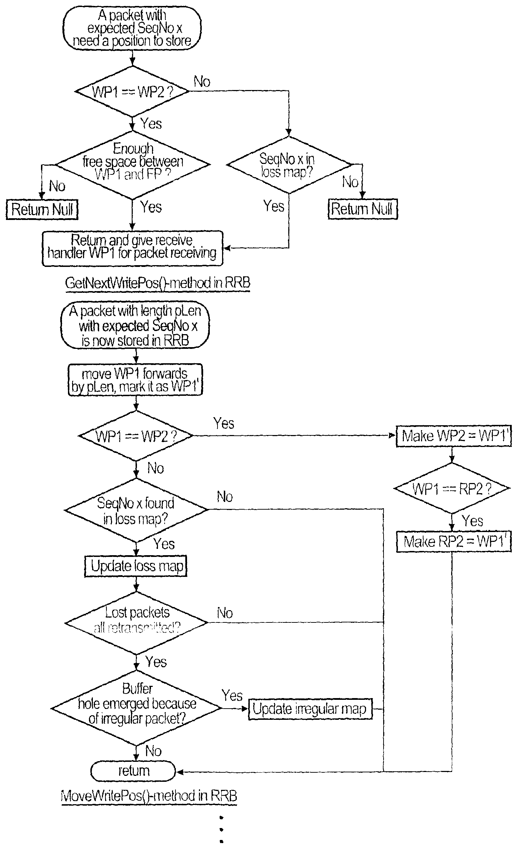

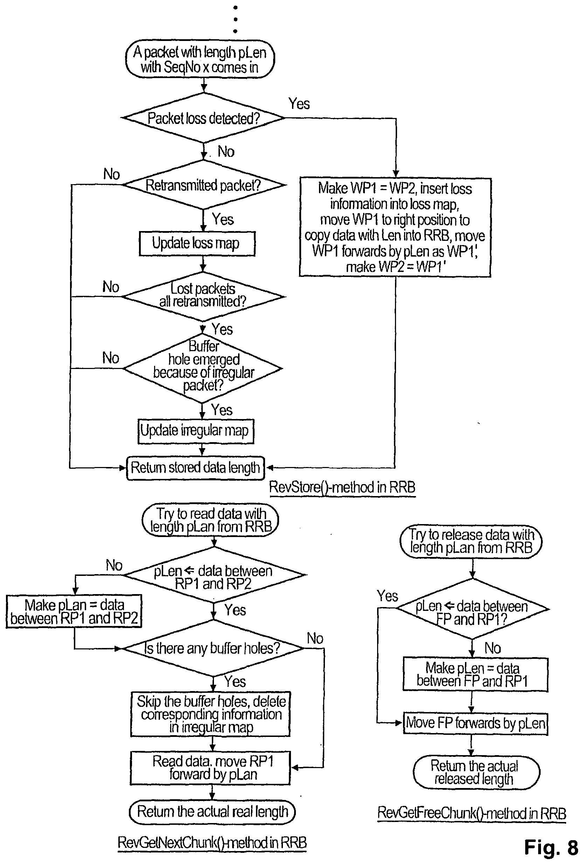

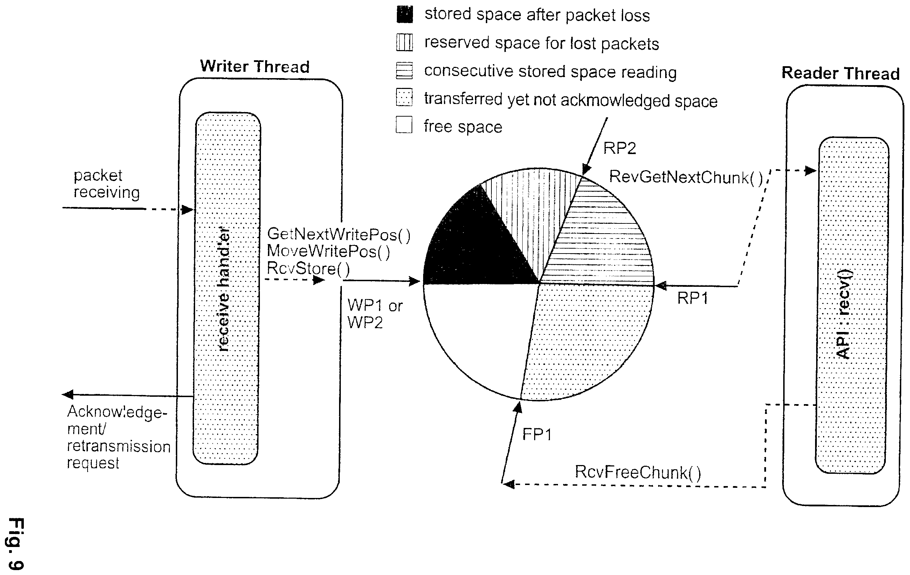

Referring to Fig. 8 and 9, the functionality of the receive memory ring buffer (RRB) 102 is described in further detail. Fig. 8 shows a schematic representation of five methods which can be implemented in the receive memory ring buffer (RRB) 102. Fig. 9 shows a schematic representation of an interaction of the methods depicted in Fig. 8.

The RRB 102 is used in order to receive data and store them at the right position. The basic functionality of the RRB 102 is similar to those of the SRB 100. However, it must be extended by some more means, since packet loss and the corresponding retransmission always has to be taken into account.

Besides the pointers RP, WP, and FP, which are referred to as RP1, WP1, and FP1, additional pointers, namely RP2 and WP2, are introduced within the RRB 102:
- A write pointer (WP1) can only be used by writer thread, to indicate the actual write position. If a data chunk has been stored successfully into the RRB 102, the WP1 should be moved ahead by the length of the stored chunk. When the sequence number of the received packet is not the consecutive one, a packet loss has been detected and the stored chunk has to be moved ahead to the proper position for that sequence number. So a gap in the buffer is arisen, in which retransmitted packets must be stored. When retransmitted packets arrive, the WP1 will be moved backwards, to fill the gap.
- In contrast to the WP1, a additional write pointer WP2 is never moved back, and so it depicts the outer bound of the RRB 102. So, it records the position of received packet with currently largest sequence number.
- A read pointer (RP1) has the same functionality as the SRB-RP 300 within the SRB 100.
- An additional read pointer (RP2) marks the upper bound of the consecutive data chunks for reading, and it can only be moved by writer thread. Once packet loss is detected, the RP2 points at the position of the last in-order and consecutive received data packet. It moves forwards only if all data packets are received in-order and consecutive, or if the first gap within the buffer is filled. Therefore the reader thread can read the stored data between the RP1 and RP2.
- A FP has the same functionality as the SRB-FP 302 in the SRB 100.

Referring now to Fig. 8, the RRB 102 provides five major methods to provide receiver buffer operations. Prerequisites for the RRB 102 methods:
- One additional data structure - here called loss map - must be defined. This map is introduced in order to record all the information about lost packets - (the first lost packet sequence number, the number of lost packets, the retransmission begin position in the RRB 102, the reserved free space for these packets, etc.). Since it is not known if there are any irregular packets during retransmission, free space is reserved for packet retransmission as *<number of total lost packets>* * *maxPayloadSize.* The *maxPayloadSize* is the maximal predefined data packet size transmitted over the network.
- Another data structure - here called irregular map - for recording the begin position and the length of a buffer hole, due to special cases of irregular packet loss. Since this irregular map data structure is accessed from a reader thread as well as from writer thread, its access has to be synchronized with a mutex. However, in well configured networks, transmission of irregular packets should happen quite seldom (< 1 % packet loss).

Referring to Fig. 9, three out of the five methods described above can be used from within the writer thread (receive handler 103), namely *GetNextWritePos()*-*, MoveWritePos()-,* and *RcvStore()*-methods.

*GetNextWritePos()* returns the position, at which next data packet should be stored. This could be an in-order and consecutive data packet, but also could be an incoming retransmitted packet.

If a data packet is successfully received into the position provided by *GetNextWritePos(), MoveWritePos()* is called to move the WP1. After moving WP1 *MoveWritePos()* has to test if this is a retransmitted one packet, in which case it has to also test whether any irregular packets cause a hole in reserved buffer space and update irregular map if a hole does exist. If the recently received data packet is in-order and consecutive, RP2 is also moved equal to WP1 by *MoveWritePos().* But if the recently received data packet is stored consecutive into RRB after packet loss, only the WP2 should be moved equal to WP1 by *MoveWritePos()* to mark the currently received packet with largest sequence number.

If a packet loss is detected in receive handler, *RcvStore()* is used to insert the corresponding lost information into loss map. The *RcvGetNextChunk()-*method is used by the API-Thread in order to fetch received data. The RP1 is moved, when data are fetched.

*RcvFreeChunk()-*method is called by API-thread to move FP after successful return from *RcvGetNextChunk(),* in order to free this space for further data packet reception.

## Claims

1. A memory buffer management system, which is connectable to a computer network system using a network data transport protocol provided for a packetized data transport in the computer network system, the memory buffer management system comprising:
- a thread-implemented send handler (104), a thread-implemented receive handler (103) and an API-thread (1) for receiving data from and passing data to a user application,
- a send memory ring buffer (100), configured to receive send data from the user application in the API thread (1) and submit the send data via the thread-implemented send handler (104),
- a receiving memory ring buffer (102), configured to receive received data via the thread-implemented receive handler (103) and to pass said received data to the user application in the API thread (1), and
- a send token ring buffer (101), configured to manage access to the send data for the send handler (104) and the receive handler (103), and to record data packet information about data packets stored in the send memory ring buffer (100),
wherein the send memory ring buffer (100) comprises:
- a read pointer (300), configured to point at the beginning of an occupied memory area occupied by stored data readable by said send handler (104), where said read pointer (300) can only be moved forward by the send handler (104),
- a write pointer (301), configured to point at the beginning of a still free memory area capable of receiving data to be stored in said API thread (1), where said write pointer (301) can only be moved by the API thread (1), and
- a filled pointer (302), configured to point at the beginning of a memory area that is at least partially filled with stored data that has not yet been acknowledged and therefore not yet been released for re-writing in the send memory ring buffer (100), where said filled pointer (302) can only be moved by the receive handler (103),
wherein the occupied memory area in the send memory ring buffer (100) is located between the read pointer (300) and the write pointer (301), wherein the still free memory area is located between the write pointer (301) and the filled pointer (302), and wherein the at least partially filled memory area is located between the filled pointer (302) and the read pointer (301), wherein the send token ring buffer (101) comprises:
- a filled pointer (800), configured to point at the current released position that is released for writing in the send token ring buffer (101), where said filled pointer (800) can only be moved by the receive handler (103) after having received an acknowledgement for the data packet the information of which is stored at the current released position, and
- a write pointer (801), configured to point at the beginning of a still free memory area in the send token ring buffer (101) capable of receiving said data packet information via the send handler (104), where said write pointer (801) can only be moved by the send handler (104),
wherein the receiving memory ring buffer (102) comprises:
- a first read pointer (RP1), configured to point at the beginning of an occupied memory area occupied by stored data readable by said API thread (1),
- a first write pointer (WP1), configured to point at the actual write position and to be moved backwards to store retransmitted data packets, where said write pointer (WP1) can only be moved by the receive handler (103),
- a filled pointer (FP1), configured to point at the beginning of a memory area that is at least partially filled with stored data, that has not yet been released for re-writing in the receiving memory ring buffer (102), where said filled pointer (FP1) can only be moved by the API thread (1)
- a second read pointer (RP2) which points at the position of the last in-order and consecutive received data packet, such that it marks the upper bound of the consecutive data packets for reading, which can only be moved by the receive handler (103), and
- a second write pointer (WP2), configured to point at the beginning of a still free memory area in the receiving memory ring buffer (102) capable of receiving data to be stored via the receive handler (103), where said second write pointer (WP2) can only be moved by the receive handler (103), and is never moved backwards, such that it records the position of a received data packet with the currently largest sequence number.

2. Memory buffer management system according to claim 1, wherein the read pointer (300) of the send memory ring buffer (100) is configured to be moved forward by an amount of read data, which are read from the occupied memory area.

3. Memory buffer management system according to claim 1 or 2, wherein the write pointer (301) of the send memory ring buffer (100) is configured to be moved forward by an amount of written data, which are written into the still free memory area of the send memory ring buffer (100) .

4. Memory buffer management system according to at least one of the preceding claims, wherein the send token ring buffer (101) is configured to provide data packet retransmission information to the send handler (104) for a data packet retransmission.

5. Memory buffer management system according to at least one of the preceding claims, wherein the send memory ring buffer (100), the receiving memory ring buffer (102), and the send token ring buffer (101) are implemented by an implementation selected from the following group of implementations: embedded software implementation, and application layer process implementation.

6. A method for operating a memory buffer management system in a multi-thread environment for managing data exchange between a user application implemented on a computer, which is connectable to a computer network system using a network data transport protocol provided for a packetized data transport in the computer network system, the method comprising steps of:
- in a send memory ring buffer (100), receiving send data from the user application and submitting the send data via a thread-implemented send handler (104) of the memory buffer management system,
- in a receiving memory ring buffer (102), receiving receive data via a thread-implemented receive handler (103) of the memory buffer management system and passing the receive data to the user application, and
- in a send token ring buffer (101), recording data packet information about data packets stored in the send memory ring buffer (100) for managing access to the send data for the send handler (104) and the receive handler(103), and
wherein the send memory ring buffer (100), is implementing the following group of pointers:
- a read pointer (300) pointing at the beginning of an occupied memory area occupied by stored data readable by said send handler (104), where said read pointer (300) can only be moved forward by the send handler (104),
- a write pointer (301) pointing at the beginning of a still free memory area in the send memory ring buffer (100) capable of receiving data to be stored in an API thread (1) of the memory buffer management system for receiving data from and passing data to the user application, where said write pointer (301) can only be moved by the API thread (1), and
- a filled pointer (302) pointing at the beginning of a memory area that is at least partially filled with stored data that has not yet been acknowledged and therefore not yet been released for rewriting in the send memory ring buffer (100), where said filled pointer (302) can only be moved by the receive handler (103),
wherein the send token ring buffer (101) is implementing the following group of pointers:
- a filled pointer (800), configured to point at the current released position in the send token ring buffer (101), where said filled pointer (800) can only be moved by the receive handler (103) after having received an acknowledgement for the data packet the information of which is stored at the current released position, and
- a write pointer (801), configured to point at the beginning of a still free memory area in the send token ring buffer (101) capable of receiving data packet information of data to be stored via the send handler (104), where said write pointer (801) can only be moved by the send handler (104),
wherein the receiving memory ring buffer (102) is implementing the following group of pointers:
- a first read pointer (RP1), pointing at the beginning of an occupied memory area occupied by stored data readable by the API thread (1),
- a first write pointer (WP1), pointing at the actual write position and to be moved backwards to store retransmitted data packets, where said write pointer (WP1) can only be moved by the receive handler (103),
- a filled pointer (FP1), pointing at the beginning of a memory area that is at least partially filled with stored data, that has not yet been released for re-writing in the receiving memory ring buffer (102), where said filled pointer (FP1) can only be moved by the API thread (1),
- a second read pointer (RP2) which points at the position of the last in-order and consecutive received data packet, such that it marks the upper bound of the consecutive data chunks for reading, which can only be moved by the receive handler (103),
- a second write pointer (WP2), which points at the beginning of a still free memory area in the receiving memory ring buffer (102) capable of receiving data to be stored via the receive handler (103), where said second write pointer (WP2) can only be moved by the receive handler (103), and is never moved backwards, such that it records the position of a received data packet with the currently largest sequence number.

7. Method according to claim 6, comprising a step of moving the read pointer (300) of the send memory ring buffer (100) forward by an amount of read data which are read from the occupied memory area.

8. Method according to claim 6 or 7, comprising a step of moving the write pointer (301) of the send memory ring buffer (100) forward by an amount of written data which are written into the still free memory area in the send memory ring buffer (100).

## Patentansprüche

1. Ein Memory Buffer Managementsystem, das mit einem Computernetzwerksystem unter Verwendung eines Netzwerkdatentransportprotokolls verknüpfbar ist, das für einen paketierten Datentransport in dem Computernetzwerksystem vorgesehen ist, wobei das Memory Buffer Managementsystem Folgendes umfasst:
- einen Thread-implementierten Send Handler (104), einen Thread-implementierten Receive Handler (103) und einen API-Thread (1) zum Empfangen von Daten von und Weiterleiten von Daten an eine Benutzeranwendung,
- einen Send Memory Ringbuffer (100), der konfiguriert ist, um Daten von der Benutzeranwendung in dem API-Thread (1) zu empfangen und die Sendedaten über den Thread-implementierten Send Handler (104) zu senden,
- einen Receiving Memory Ringbuffer (102), der so konfiguriert ist, dass er empfangene Daten über den Thread-implementierten Receive Handler (103) empfängt und diese empfangenen Daten an die Benutzeranwendung im API-Thread (1) weiterleitet, und
- einen Send Token Ringbuffer (101), der konfiguriert ist, um den Zugriff auf die Sendedaten für den Send Handler (104) und den Receive Handler (103) zu verwalten und um Datenpaketinformationen über im Send Memory Ringbuffer (100) gespeicherte Datenpakete zu protokollieren,
wobei der Send Memory Ringbuffer (100) Folgendes umfasst:
- einen Read Pointer (300), der so konfiguriert ist, dass er auf den Anfang eines belegten Speicherbereichs zeigt, der mit durch den Send Handler (104) lesbaren gespeicherten Daten belegt ist, wobei der Read Pointer (300) nur durch den Send Handler (104) vorwärts bewegt werden kann,
- einen Write Pointer (301), der so konfiguriert ist, dass er auf den Anfang eines noch freien Speicherbereichs zeigt, der in dem API-Thread (1) zu speichernde Daten empfangen kann, wobei der Write Pointer (301) nur durch den API-Thread (1) bewegt werden kann, und
- einen Filled Pointer (302), der so konfiguriert ist, dass er auf den Anfang eines Speicherbereichs zeigt, der zumindest teilweise mit noch nicht bestätigten und daher noch nicht zum erneuten Schreiben freigegebenen Daten im Send Memory Ringbuffer (100) gefüllt ist, wobei der Filled Pointer (302) nur vom Receive Handler (103) bewegt werden kann,
wobei sich der belegte Speicherbereich im Send Memory Ringbuffer (100) zwischen dem Read Pointer (300) und dem Write Pointer (301) befindet, wobei der noch freie Speicherbereich zwischen dem Write Pointer (301) und dem Filled Pointer (302) liegt und wobei der zumindest teilweise gefüllte Speicherbereich zwischen dem Filled Pointer (302) und dem Read Pointer (301) liegt,
wobei der Send Token Ringbuffer (101) Folgendes umfasst:
- einen Filled Pointer (800), der so konfiguriert ist, dass er auf die aktuelle freigegebene Position zeigt, die zum Schreiben in den Send Token Ringbuffer (101) freigegeben ist, wobei der Filled Pointer (800) nur durch den Receive Handler (103) bewegt werden kann, nachdem eine Bestätigung für das Datenpaket, dessen Information an der aktuellen freigegebenen Position gespeichert ist, empfangen wurde, und
- einen Write Pointer (801), der so konfiguriert ist, dass er auf den Anfang eines noch freien Speicherbereichs im Send Token Ringbuffer (101) zeigt, der die Datenpaketinformationen über den Send Handler (104) empfangen kann, wobei der Write Pointer (801) nur vom Send Handler (104) bewegt werden kann,
wobei der Receiving Memory Ringbuffer (102) Folgendes umfasst:
- einen ersten Read Pointer (RP1), der so konfiguriert ist, dass er auf den Anfang eines belegten Speicherbereichs zeigt, der von gespeicherten Daten belegt ist, die von dem API-Thread (1) gelesen werden können,
- einen ersten Write Pointer (WP1), der so konfiguriert ist, dass er auf die aktuelle Schreibposition zeigt und rückwärts bewegt wird, um erneut übertragene Datenpakete zu speichern, wobei der Write Pointer (WP1) nur durch den Receive Handler (103) bewegt werden kann,
- einen Filled Pointer (FP1), der so konfiguriert ist, dass er auf den Anfang eines Speicherbereichs zeigt, der zumindest teilweise mit gespeicherten Daten gefüllt ist, die noch nicht zum erneuten Schreiben in den Receiving Memory Ringbuffer (102) freigegeben wurden, wobei der Filled Pointer (FP1) nur vom API-Thread (1) verschoben werden kann
- einen zweiten Read Pointer (RP2), der auf die Position des letzten ordnungsgemäß und fortlaufend empfangenen Datenpakets zeigt und damit die obere Grenze der aufeinanderfolgend empfangenen Datenpakete zum Lesen markiert und der nur durch den Receive Handler (103) bewegt werden kann, und
- einen zweiten Write Pointer (WP2), der so konfiguriert ist, dass er auf den Anfang eines noch freien Speicherbereichs im Receiving Memory Ringbuffer (102) zeigt, der über den Receive Handler (103) zu speichernde Daten empfangen kann, wobei der zweite Write Pointer (WP2) nur durch den Receive Handler (103) bewegt werden kann und niemals rückwärts bewegt wird, so dass er die Position eines empfangenen Datenpakets mit der momentan größten Sequenznummer kennzeichnet.

2. Memory Buffer Managementsystem nach Anspruch 1, wobei der Read Pointer (300) des Send Memory Ringbuffers (100) so konfiguriert ist, dass er entsprechend der Menge der aus dem belegten Speicherbereich gelesenen Daten vorwärts bewegt wird.

3. Memory Buffer Managementsystem nach Anspruch 1 oder 2, wobei der write Pointer (301) des Send Memory Ringbuffers (100) so konfiguriert ist, dass er entsprechend der Menge der in den freien Speicherbereich des Send Memory Ringbuffers (100) geschrieben Daten vorwärts bewegt wird.

4. Memory Buffer Managementsystem nach mindestens einem der vorhergehenden Ansprüche, wobei der Send Token Ringbuffer (101) so konfiguriert ist, dass er dem Send Handler (104) Datenpaket-Neuübertragungs-Informationen für eine Datenpaket-Neuübertragung bereit stellt.

5. Memory Buffer Managementsystem nach mindestens einem der vorhergehenden Ansprüche, wobei der Send Memory Ringbuffer (100), der Receiving Memory Ringbuffer (102) und der Send Token Ringbuffer (101) durch eine der folgende Gruppe an Implementierungen umgesetzt sind: Embedded Software Implementierung und Prozessimplementierung auf Anwendungsebene.

6. Verfahren zum Betreiben eines Memory Buffer Managementsystems in einer Multithread-Umgebung zum Verwalten des Datenaustauschs zwischen einer auf einem Computer implementierten Benutzeranwendung, die mit einem Computernetzwerksystem unter Verwendung eines für einen paketierten Datentransport vorgesehenen Netzwerkdaten-Transportprotokolls verknüpfbar ist, wobei das Verfahren die folgenden Schritte umfasst:
- Empfangen von Sendedaten der Benutzeranwendung in einem Send Memory Ringbuffer (100) und Übermitteln der Sendedaten über einen Thread-implementierten Send Handler (104)des Memory Buffer Managementsystems,
- Empfangen von Empfangsdaten in einem Receiving Memory Ringbuffer (102) über einen Thread-implementierten Receive Handler (103) des Memory Buffer Managementsystems und Weiterleiten der Empfangsdaten an die Benutzeranwendung, und
- Aufzeichnen von Datenpaketinformationen in einem Send Token Ringbuffer (101) über im Send Memory Ringbuffer (100) gespeicherte Datenpakete zur Verwaltung des Zugriffs auf die Sendedaten für den Send Handler (104) und den Receive Handler (103), und
wobei der Send Memory Ringbuffer (100) die folgende Gruppe von Pointern implementiert:
- einen Read Pointer (300), der auf den Anfang eines belegten Speicherbereichs zeigt, der von durch den Send Handler (104) lesbaren gespeicherten Daten belegt ist, wobei der Read Pointer (300) nur durch den Send Handler (104)vorwärts bewegt werden kann,
- einen Write Pointer (301), der auf den Anfang eines noch freien Speicherbereichs im Send Memory Ringbuffer (100) zeigt, der in einem API-Thread (1) des Memory Buffer Managementsystems zu speichernde Daten empfangen kann und dem Empfang von Daten von bzw. die Weiterleitung von Daten an die Benutzeranwendung dient, wobei der Write Pointer (301) nur durch den API-Thread (1) bewegt werden kann, und
- ein Filled Pointer (302), der auf den Anfang eines Speicherbereichs zeigt, der zumindest teilweise mit gespeicherten Daten gefüllt ist, die noch nicht bestätigt wurden und daher noch nicht zum erneuten Schreiben in den Send Memory Ringbuffer (100) freigegeben wurden, wobei der Filled Pointer (302) nur durch den Receive Handler (103) bewegt werden kann, wobei der Send Token Ringbuffer (101) die folgende Gruppe von Pointern implementiert:
- einen Filled Pointer (800), der so konfiguriert ist, dass er auf die aktuelle freigegebene Position im Send Token Ringbuffer (101) zeigt, wobei der Filled Pointer (800) nur durch den Receive Handler (103) bewegt werden kann, nachdem er eine Bestätigung für das Datenpaket empfangen hat, dessen Information an der aktuellen freigegebenen Position gespeichert ist, und
- einen Write Pointer (801), der so konfiguriert ist, dass er auf den Anfang eines noch freien Speicherbereichs im Send Token Ringbuffer (101) zeigt, der Datenpaketinformationen von über den Send Handler (104) zu speichernden Daten empfangen kann, wobei der Write Pointer (801) nur durch den Send Handler (104) bewegt werden kann,
wobei der Receiving Memory Ringbuffer (102) die folgende Gruppe von Pointern implementiert:
- einen ersten Read Pointer (RP1), der auf den Anfang eines belegten Speicherbereichs zeigt, der von gespeicherten Daten belegt ist, die von dem API-Thread (1) gelesen werden können,
- einen ersten Write Pointer (WP1), der auf die aktuelle Schreibposition zeigt und rückwärts bewegt wird, um erneut übertragene Datenpakete zu speichern, wobei der Write Pointer (WP1) nur durch den Receive Handler (103) bewegt werden kann,
- einen Filled Pointer (FP1), der auf den Anfang eines Speicherbereichs zeigt, der zumindest teilweise mit gespeicherten Daten gefüllt ist, die noch nicht zum erneuten Schreiben in den Receiving Memory Ringbuffer (102) freigegeben wurden, wobei der Filled Pointer (FP1) nur vom API-Thread (1) verschoben werden kann
- einen zweiten Read Pointer (RP2), der auf die Position des letzten ordnungsgemäß und fortlaufend empfangenen Datenpakets zeigt und damit die obere Grenze der aufeinanderfolgend empfangenen Datenpakete zum Lesen markiert und der nur durch den Receive Handler (103) bewegt werden kann, und
- einen zweiten Write Pointer (WP2), der auf den Anfang eines noch freien Speicherbereichs im Receiving Memory Ringbuffer (102) zeigt, der über den Receive Handler (103) zu speichernde Daten empfangen kann, wobei der zweite Write Pointer (WP2) nur durch den Receive Handler (103) bewegt werden kann und niemals rückwärts bewegt wird, so dass er die Position eines empfangenen Datenpakets mit der momentan größten Sequenznummer kennzeichnet.

7. Verfahren nach Anspruch 6, einen Schritt zur Vorwärtsbewegung des Read Pointers (300) des Send Memory Ringbuffers (100) um eine Menge von Lesedaten beschreibend, die aus dem belegten Speicherbereich gelesen werden.

8. Verfahren nach Anspruch 6 oder 7, einen Schritt zur Vorwärtsbewegung des Write Pointers (301) des Send Memory Ringbuffers (100) um eine Menge geschriebener Daten beschreibend, die in den noch freien Speicherbereich im Send Memory Ringbuffer geschrieben werden (100).

## Revendications

1. Système de gestion de mémoire tampon, connectable à un système de réseau informatique via un protocole de transfert des données réseau fourni pour un transfert des données mises en paquet dans le système de réseau informatique, ledit système de gestion de mémoire tampon comprenant :
- un gestionnaire d'envoi à implémentation par thread (104), un gestionnaire de réception à implémentation par thread (103) et une API-thread (1) pour la réception des données provenant d'une application utilisateur et la transmission des données vers une application utilisateur,
- une mémoire tampon d'envoi en anneau (100), configurée pour réceptionner les données d'envoi provenant d'une application utilisateur dans l'API thread (1) et pour transmettre les données d'envoi via le gestionnaire d'envoi à implémentation par thread (104),
- une mémoire tampon de réception en anneau (102), configurée pour réceptionner les données reçues via le gestionnaire de réception à implémentation par thread (103) et pour transmettre lesdites données reçues à l'application utilisateur dans l'API thread (1), et
- une mémoire tampon d'envoi en anneau à jeton (101), configurée pour gérer l'accès aux données d'envoi pour le gestionnaire d'envoi (104) et le gestionnaire de réception (103), et pour enregistrer les informations sur les paquets de données stockés dans la mémoire tampon d'envoi en anneau (100),
dans lequel la mémoire tampon d'envoi en anneau (100) comprend :
- un pointeur de lecture (300), configuré pour indiquer le début d'une zone de mémoire occupée par des données stockées pouvant être lues par ledit gestionnaire d'envoi (104), où ledit pointeur de lecture (300) peut uniquement être déplacé vers l'avant par le gestionnaire d'envoi (104),
- un pointeur d'écriture (301), configuré pour indiquer le début d'une zone de mémoire encore libre et pouvant recevoir les données à stocker dans ladite API thread (1), où le pointeur d'écriture (301) peut uniquement être déplacé par l'API thread (1), et
- un pointeur rempli (302), configuré pour indiquer le début d'une zone de mémoire au moins partiellement remplie de données stockées dont la réception n'a pas encore été confirmée et qui n'ont donc pas encore été libérées pour être réécrites dans la mémoire tampon d'envoi en anneau (100), où ledit pointeur rempli (302) peut uniquement être déplacé par le gestionnaire de réception (103),
dans lequel la zone de mémoire occupée dans la mémoire tampon d'envoi en anneau (100) est située entre le pointeur de lecture (300) et le pointeur d'écriture (301), dans lequel la zone de mémoire encore libre est située entre le pointeur d'écriture (301) et le pointeur rempli (302), et dans lequel la zone de mémoire au moins partiellement remplie est située entre le pointeur rempli (302) et le pointeur de lecture (301),
dans lequel la mémoire tampon d'envoi en anneau à jeton (101) comprend :
- un pointeur rempli (800), configuré pour indiquer la position actuelle de libération pour écriture dans la mémoire tampon d'envoi en anneau à jeton (101), où ledit pointeur rempli (800) peut uniquement être déplacé par le gestionnaire de réception (103) après avoir reçu la confirmation de réception du paquet de données dont les informations sont stockées à la position actuelle de libération, et
- un pointeur d'écriture (801), configuré pour indiquer le début d'une zone de mémoire encore libre dans la mémoire tampon d'envoi en anneau à jeton (101) pouvant recevoir lesdites informations des paquets de données via le gestionnaire d'envoi (104), où ledit pointeur d'écriture (801) peut uniquement être déplacé par le gestionnaire d'envoi (104),
dans lequel la mémoire tampon de réception en anneau (102) comprend :
- un premier pointeur de lecture (RP1), configuré pour indiquer le début d'une zone de mémoire occupée par des données stockées pouvant être lues par ladite API thread (1),
- un premier pointeur d'écriture (WP1), configuré pour indiquer la position actuelle d'écriture et à déplacer vers l'arrière pour stocker les paquets de données retransmis, où ledit pointeur d'écriture (WP1) peut uniquement être déplacé par le gestionnaire de réception (103),
- un pointeur rempli (FP1), configuré pour indiquer le début d'une zone de mémoire au moins partiellement remplie de données stockées qui n'ont pas encore été libérées pour être réécrites dans la mémoire tampon d'envoi en anneau (102), où ledit pointeur rempli (FP1) peut uniquement être déplacé par l'API thread (1),
- un second pointeur de lecture (RP2) qui indique la position du dernier paquet de données, dans l'ordre, et du paquet de données reçu consécutivement, de telle sorte qu'il définit limite supérieure des paquets de données consécutifs pour la lecture, qui peut uniquement être déplacé par le gestionnaire de réception (103), et
- un second pointeur d'écriture (WP2), configuré pour indiquer le début d'une zone de mémoire encore libre dans la mémoire tampon de réception en anneau (102) pouvant recevoir les données à stocker via le gestionnaire de réception (103), où ledit second pointeur d'écriture (WP2) peut uniquement être déplacé par le gestionnaire de réception (103), et n'est jamais déplacé vers l'arrière, de telle sorte qu'il enregistre la position d'un paquet de données reçu avec le numéro de séquence actuel le plus élevé.

2. Système de gestion de mémoire tampon selon la revendication 1, dans lequel le pointeur de lecture (300) de la mémoire tampon d'envoi en anneau (100) est configuré pour être déplacé vers l'avant par une quantité de données de lecture, qui sont lues depuis la zone de mémoire occupée.

3. Système de gestion de mémoire tampon selon la revendication 1 ou 2, dans lequel le pointeur d'écriture (301) de la mémoire tampon d'envoi en anneau (100) est configuré pour être déplacé vers l'avant par une quantité de données d'écriture, qui sont écrites dans la zone de mémoire encore libre de la mémoire tampon d'envoi en anneau (100).

4. Système de gestion de mémoire tampon selon l'une des revendications précédentes, dans lequel la mémoire tampon d'envoi en anneau à jeton (101) est configurée pour fournir les informations de retransmission des paquets de données au gestionnaire d'envoi (104) pour la retransmission d'un paquet de données.

5. Système de gestion de mémoire tampon selon l'une des revendications précédentes, dans lequel la mémoire tampon d'envoi en anneau (100), la mémoire tampon de réception en anneau (102), et la mémoire tampon d'envoi en anneau à jeton (101) sont implémentées par une implémentation sélectionnée parmi les implémentations suivantes : implémentation de logiciel embarqué, implémentation de processus de couche d'application.

6. Procédé d'exploitation d'un système de gestion de mémoire tampon dans un environnement multithread pour la gestion des échanges de données entre une application utilisateur implémentée sur un ordinateur, connectable à un système de réseau informatique via un protocole de transfert des données réseau fourni pour un transfert des données mises en paquet dans le système de réseau informatique, ledit procédé comprenant les étapes suivantes :
- dans une mémoire tampon d'envoi en anneau (100), réception des données d'envoi provenant de l'application utilisateur et transmission des données d'envoi via un gestionnaire d'envoi à implémentation par thread (104) du système de gestion de mémoire tampon,
- dans une mémoire tampon de réception en anneau (102), réception des données de réception via un gestionnaire de réception à implémentation par thread (103) du système de gestion de mémoire tampon et transmission des données de réception à l'application utilisateur, et
- dans une mémoire tampon d'envoi en anneau à jeton (101), enregistrement des informations des paquets de données stockées dans la mémoire tampon d'envoi en anneau (100) pour gérer l'accès aux données d'envoi pour le gestionnaire d'envoi (104) et le gestionnaire de réception (103), et
dans lequel la mémoire tampon d'envoi en anneau (100) implémente le groupe de pointeurs suivants :
- un pointeur de lecture (300) indiquant le début d'une zone de mémoire occupée par des données stockées pouvant être lues par ledit gestionnaire d'envoi (104), où ledit pointeur de lecture (300) peut uniquement être déplacé vers l'avant par le gestionnaire d'envoi (104),
- un pointeur d'écriture (301) indiquant le début d'une zone de mémoire encore libre dans la mémoire tampon d'envoi en anneau (100) pouvant réceptionner les données à stocker dans une API thread (1) du système de gestion de mémoire tampon pour la réception des données provenant de l'application utilisateur et la transmission des données vers l'application utilisateur, où ledit pointeur d'écriture (301) peut uniquement être déplacé par l'API thread (1), et
- un pointeur rempli (302) indiquant le début d'une zone de mémoire au moins partiellement remplie de données stockées dont la réception n'a pas encore été confirmée et qui n'ont donc pas encore été libérées pour être réécrites dans la mémoire tampon d'envoi en anneau (100), où ledit pointeur rempli (302) peut uniquement être déplacé par le gestionnaire de réception (103),
dans lequel la mémoire tampon d'envoi en anneau à jeton (101) implémente le groupe de pointeurs suivants :
- un pointeur rempli (800), configuré pour indiquer la position actuelle de libération dans la mémoire tampon d'envoi en anneau à jeton (101), où ledit pointeur rempli (800) peut uniquement être déplacé par le gestionnaire de réception (103) après avoir reçu la confirmation de réception du paquet de données dont les informations sont stockées à la position actuelle de libération, et
- un pointeur d'écriture (801), configuré pour indiquer le début d'une zone de mémoire encore libre dans la mémoire tampon d'envoi en anneau à jeton (101) pouvant réceptionner les informations des paquets de données à stocker via le gestionnaire d'envoi (104), où ledit pointeur d'écriture (801) peut uniquement être déplacé par le gestionnaire d'envoi (104),
dans lequel la mémoire tampon de réception en anneau (102) implémente le groupe de pointeurs suivants :
- un premier pointeur de lecture (RP1), indiquant le début d'une zone de mémoire occupée par des données stockées pouvant être lues par l'API thread (1),
- un premier pointeur d'écriture (WP1), indiquant la position actuelle d'écriture et à déplacer vers l'arrière pour stocker les paquets de données retransmis, où ledit pointeur d'écriture (WP1) peut uniquement être déplacé par le gestionnaire de réception (103),
- un pointeur rempli (FP1), indiquant le début d'une zone de mémoire au moins partiellement remplie de données stockées qui n'ont pas encore été libérées pour être réécrites dans la mémoire tampon d'envoi en anneau (102), où ledit pointeur rempli (FP1) peut uniquement être déplacé par l'API thread (1),
- un second pointeur de lecture (RP2) qui indique la position du dernier paquet de données, dans l'ordre, et du paquet de données reçu consécutivement, de telle sorte qu'il définit la limite supérieure des blocs de données consécutifs pour la lecture, qui peuvent uniquement être déplacés par le gestionnaire de réception (103),
- un second pointeur d'écriture (WP2), qui indique le début d'une zone de mémoire encore libre dans la mémoire tampon de réception en anneau (102) pouvant réceptionner les données à stocker via le gestionnaire de réception (103), où ledit second pointeur d'écriture (WP2) peut uniquement être déplacé par le gestionnaire de réception (103), et n'est jamais déplacé vers l'arrière, de telle sorte qu'il enregistre la position d'un paquet de données reçu avec le numéro de séquence actuel le plus élevé.

7. Procédé selon la revendication 6, comprenant une étape de déplacement vers l'avant du pointeur de lecture (300) de la mémoire tampon d'envoi en anneau (100) par une quantité de données de lecture, qui sont lues depuis la zone de mémoire occupée.

8. Procédé selon la revendication 6 ou 7, comprenant une étape de déplacement vers l'avant du pointeur d'écriture (301) de la mémoire tampon d'envoi en anneau (100) par une quantité de données d'écriture, qui sont écrites dans la zone de mémoire encore libre dans la mémoire tampon d'envoi en anneau (100).
